# EUROPEAN PATENT APPLICATION

(11) **EP 4 000 981 A1**
(43) Date of publication of application: **25.05.2022**
(21) Application number: 21208670.6
(22) Date of filing: 17.11.2021
(51) Int. Cl.: B60K 17/28

(54) **IMPROVED SEASONAL POWER TAKE-OFF ASSEMBLY FOR A WORK VEHICLE AND RELATED DISENGAGEMENT METHOD**

(30) Priority: 17.11.2020 IT 202000027543
(71) Applicant: CNH Industrial Italia S.p.A., 10135 Torino (IT)
(72) Inventor: Huber, Karl, 4100 Ottensheim (AT); Huber, Roland, 4391 Waldhausen (AT); Koeck, Reinhard, 4360 Grein (AT)
(74) Representative: CNH Industrial IP Department

(57) **Abstract**

Power take-off assembly, PTO, (1) for a work vehicle, comprising an intermediate shaft (9) and clutch means (13) housed inside an inner space (3) defined by a housing (2), the clutch means (13) being configured to selectively engage an input shaft (5) and the intermediate shaft (9), the PTO assembly (1) comprising a gear module (20) operatively interposed between the intermediate shaft (9) and the output shaft (6), the gear module (20) being configured to couple the intermediate shaft (9) to the output shaft (6) or to uncouple the intermediate shaft (9) to the output shaft (6).

## Description

### TECHNICAL FIELD

The present invention concerns a power take-off, PTO, assembly for a work vehicle such as an agricultural vehicle or an earth-moving machine and a related disengagement method.

### BACKGROUND OF THE INVENTION

Work vehicles such as agricultural vehicles comprise a power take-off (PTO) assembly comprising, in turn, a powertrain configured to provide a torque at a power take-off shaft.

Such PTO assembly usually comprises at least one clutch, which is configured to selectively couple the power take-off shaft with the output shaft of a mechanical power source of the work vehicle, possibly transmission gears and brake means. All the aforementioned elements are used for managing the torque between an input shaft and the output shaft of the PTO assembly.

Usually, the clutch device of known PTO assemblies is arranged on the output shaft and is configured to couple this latter with the torque source.

As per se known, PTO assembly is not constantly used during the working year in the field because the working elements that can be attached to the PTO output shaft are not needed.

Accordingly, it is known to seasonally isolate the output shaft from the PTO and covering via a cup the opening of the PTO so that dirty elements cannot pass in the transmission elements of the PTO.

Such decoupling is achieved by external decoupling means that are housed on the housing of the PTO shaft and that are therefore subject to the erosion due to the atmospheric agents.

Moreover, in current PTO designs, the clutch means are usually coupled to the output shaft and the output gears are driven by the input gears. In such conditions there are huge losses due to drag and oil paddling of gears.

In view of the above, the need is felt to provide a PTO assembly that is versatile and whose wear is reduced during a seasonally disengagement.

An aim of the present invention is to satisfy the above mentioned needs.

### SUMMARY OF THE INVENTION

The aforementioned aim is reached by a PTO assembly and a seasonal decoupling method as claimed in the appended independent claims.

Preferred embodiments of the invention are realized according to the claims dependent or related to the above independent claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic cross section showing a power take-off assembly according to the present invention in a first operational condition;
- Figure 2 is a schematic cross section showing a power take-off assembly according to the present invention in a second operational condition; and
- Figure 3 is a schematic cross section showing a power take-off assembly according to the present invention in a third operational condition.

### DETAILED DESCRIPTION OF THE INVENTION

Reference number 1 indicates generally a power take-off assembly, PTO, for a work vehicle (not shown).

The PTO assembly 1 comprises a housing 2 configured to delimit an inner space 3 configured to house a transmission 4 configured to regulate the torque flow between an input shaft 5 and an output shaft 6.

In particular, the housing 2 is configured to define a pair of openings 2a, 2b configured to allow the insertion of an inner portion 5a, 6a of input and output shafts 5, 6 inside inner space 3 and to allow the support of these latter in a rotatable free manner, e.g. via bearings 7.

In particular, in the input shaft 5 defines a seat 5b configured to allow the coupling with a torque providing element, e.g. another shaft 8 operationally coupled to a source of torque of the work vehicle , e.g. via a splined coupling realized on the inner surface of such seat 5b.

Conversely, the output shaft 6 preferably defines a coupling portion 6b configured to allow the coupling with an operational element, e.g. a working element that can be selectively attached to the work vehicle and using the provided torque. The coupling of such working element may be achieved via a splined coupling realized on the outer surface of the coupling portion 6b. Such coupling portion may be covered to a cap 10 when not in use.

The input shaft 5 and the output shaft 6 are rotatable about respective longitudinal axis A, B that are advantageously parallel and spaced one with respect to the other.

The transmission 4 further comprises at least an intermediate shaft 9. In particular, in the shown embodiment the transmission 4 comprises a single intermediate shaft 9 that is rotatably carried in free manner by housing 2 and preferably about input shaft 5. Accordingly, the intermediate shaft 9 is carried coaxially to input shaft 5 about axis A.

Intermediate shaft 9 comprises a first terminal portion 9a supported by inner portion 5a of input shaft 5 and a second terminal portion 9b, opposite to the first terminal portion 9a along axis A, and supported by housing 4.

The transmission 4 comprises clutch means 13 configured to selectively engage or disengage the input shaft 5 to the intermediate shaft 9.

Clutch means 13 are advantageously realized between the inner portion 5a of the input shaft 5 and the first terminal portion 9a of intermediate shaft 9. In particular, clutch means 13 comprises at least one friction element 14, in the disclosed embodiment a plurality of lamellas, configured to engage together under the pressure given by actuator means 15, e.g. hydraulic actuator means.

In greater particular, such lamellas are carried by a flanged portion 15 fixedly carried by intermediate shaft and preferably extending cantilevered parallel to axis A from a disk portion carried by first terminal portion of intermediate shaft 9 and extending radially in inner space 3 form its outer surface.

Other lamellas are carried by an actuator element 16 carried engaged in rotation but slidably carried by input axis 5 along axis A, e.g. via a splined coupling. The actuator element 16 is advantageously carried in the aforementioned movable manner on the inner portion 5a of input shaft 5.

Advantageously, clutch means 13 are housed in an upper position above the output shaft 6 thereby avoiding the direct immersion of clutch means into lubrication oil.

The actuator element 16 is controlled in motion by actuator means 17, e.g. hydraulic actuator means, configured to impart a force to actuator element 16 to engage the at least one friction element 14. Such actuators means 17 are not further described for sake of clarity, being per se known in the art.

Clutch means 13 further comprises elastic means 18 configured to exert a force opposed to the force of actuator means 17, i.e. configured to maintain the actuator element 16 in a rest condition wherein the lamellas 14 are disengaged.

Preferably, such elastic means 18 comprises coil springs. More preferably, such elastic means 18 are interposed between the first terminal portion 9a of the intermediate shaft and the actuator element 16.

The transmission 4 further comprises a gear module 20 configured to vary the torque/velocity transmitted between the output shaft 6 and the intermediate shaft 9 at least via a gear ratio. In particular, according to the disclosed embodiment, the gear module comprises a first gearing 20' and a second gearing 20" that defines two different gear ratios between the output shaft 6 and the intermediate shaft 9.

In greater detail, the both gearings 20', 20" comprises a respective first gear 20a', 20a" that is carried in a rotatably free manner on output shaft 6 and a respective second gear 20b', 20b" that is carried fixedly by intermediate shaft 9. The gearings 20', 20" comprise preferably cylindrical toothed gears.

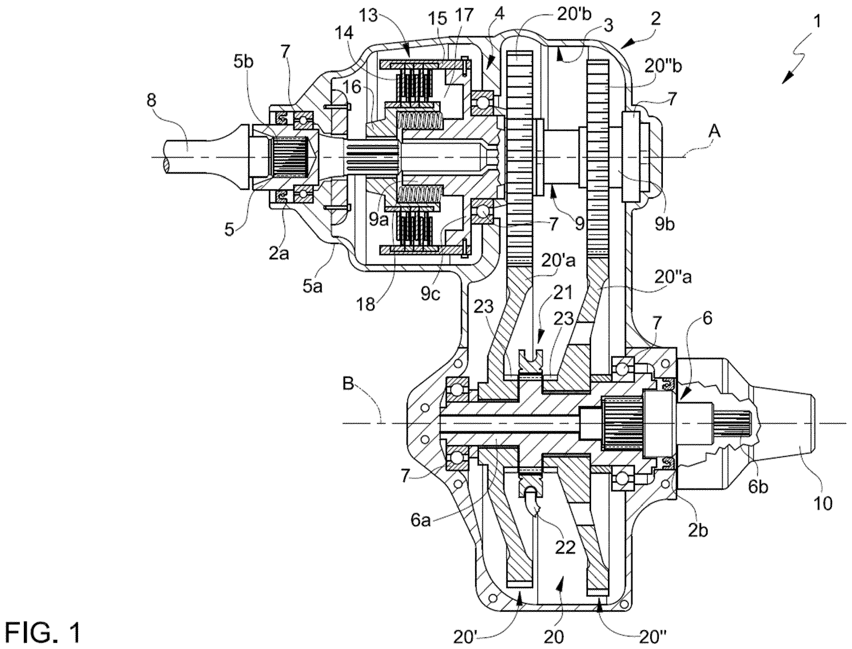

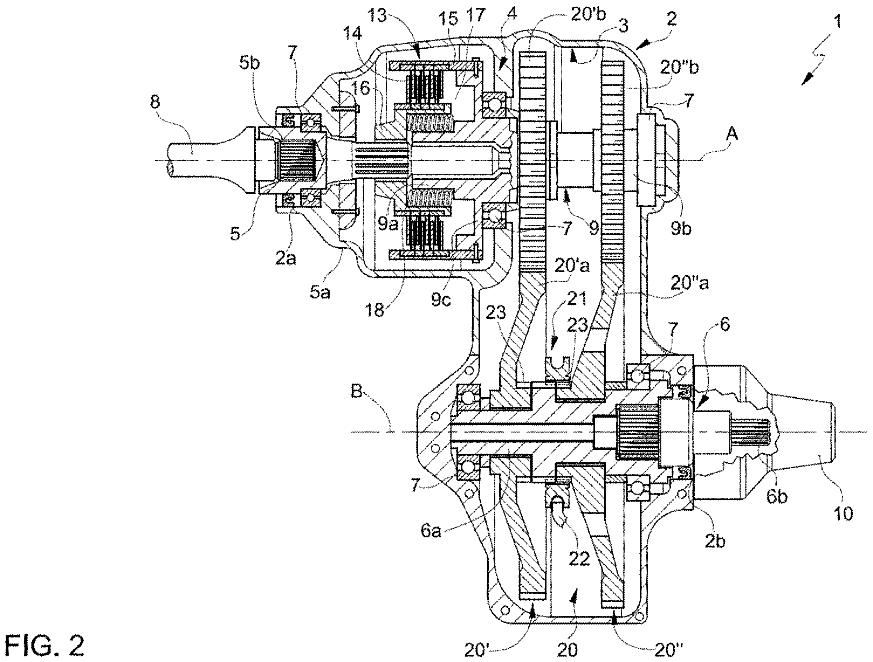

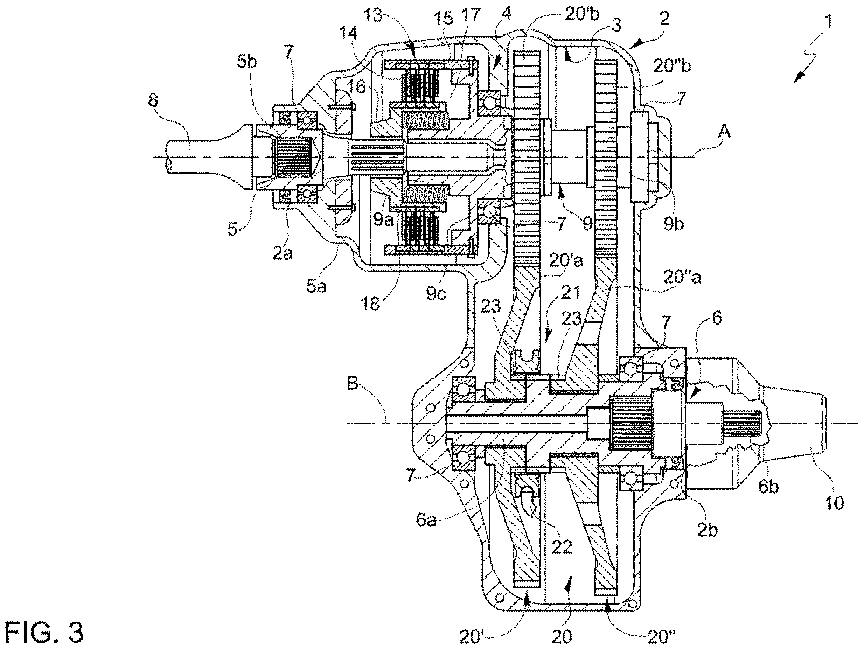

The gear module 20 further comprises coupler 21, e.g. a synchronizer or a frontal teethed gear, configured to selectively couple one between first gears 20a', 20a" to output shaft 6 or none between these latter. Accordingly, the coupler 21 may assume a first position coupling gear 20a' providing a first gear ratio to output shaft 6 (figure 2), a second position coupling gear 20a" providing a second gear ratio to output shaft 6 (figure 3) or a neutral position wherein none of such gears 20a', 20a" are engaged with coupler 21 (figure 1).

Preferably, coupler 21 is configured to cooperate via a toothed coupling 23 realized in the hub of each of gears 20a', 20a".

Coupler 21 is set in the aforementioned neutral position or in the two engaged positions thanks to actuation means 22, e.g. hydraulic means, configured to move the latter along axis B to engage respectively gear 20a', gear 20a" or none of these latter.

The operation of the PTO assembly according to the invention and described as above is the following.

In a first operational condition (figure 1), the coupler 21 is set in the neutral position. Accordingly, the torque cannot pass between input shaft 5 and output shaft 6. This latter is therefore rotatably free about axis B. Such operational condition can be used to disengage totally the output shaft 6 from transmission 4, e.g. to manipulate the working element coupled at output shaft 6 and to maintain the PTO assembly 1 when not in use. In addition, the clutch means 13 may be actuated to lock the gears of the gear module 20, thereby locking the PTO assembly 1.

In a second operational condition (figure 2), the coupler 21 is set in an engaged position to be coupled with gear 20a'' . Accordingly, in function of the coupling of clutch means 13, controlled by actuator means 17, the torque provided to input shaft 5 passes to intermediate shaft 9 and then, thanks to gearing 20", to output shaft 6. The torque at output shaft 6 is transmitted with a ratio defined by gearing 20".

In a third operational condition (figure 3), the coupled is set in an engaged position to be coupled with gear 20a'. Accordingly, in function of the coupling of clutch means 13, controlled by actuator means 17, the torque provided to input shaft 5 passes to intermediate shaft 9 and then, thanks to gearing 20', to output shaft 6. The torque at output shaft 6 is transmitted with a ratio defined by gearing 20'.

In view of the foregoing, the advantages of the PTO assembly 1 and related method according to the invention are apparent.

Thanks to the proposed PTO assembly it is possible to freely handle the output shaft by seasonally disengaging the latter from the intermediate shaft, i.e. from the output shaft.

Furthermore, the coupling between such shafts is an inner element that can be actuated hydraulically or electronically; accordingly, there is not risk of potentially corrosion due to atmospheric agents as in known system or there is not the need of physically decoupling the input shaft from the PTO, thereby reducing the risk of introduction of dirty elements.

Moreover, the gears are disconnected to the carrying shaft, the drag of the clutch is removed and gears standstill. Accordingly, the friction losses are present only in the bearings of the shaft, i.e. they are minimal.

The proposed transmission is furthermore versatile since it is possible to provide the torque at output shaft by choosing different gear ratios.

Moreover, thanks to the fact the clutch means are realized on the inner shaft vertically above the output shaft the paddling effect in clutch means 13 is reduced.

It is clear that modifications can be made to the described PTO assembly 1 and related method which do not extend beyond the scope of protection defined by the claims.

For example, the proposed clutch means 13 or the gear module 20 may comprise different elements than the described one.

Moreover, the actuation of clutch means 13 or of coupler 21 may be realized mechanically or electronically, if needed.

## Claims

1. Power take-off assembly, PTO, (1) for a work vehicle, said PTO assembly (1) comprising an input and an output shafts (5, 6) and a housing (2) defining an inner space (3), at least an inner portion (5b, 36) of said shafts (5, 6) being housed in said inner space (5),
said input shaft (5) being coupled to a source of torque of said work vehicle and said output shaft (6) being configured to be connected to a work element of said work vehicle (1),
said PTO assembly (1) comprising at least an intermediate shaft (9) and clutch means (13) housed inside said inner space (3), said clutch means (13) being configured to selectively engage one between said output shaft (6) and said input shaft (5)and said intermediate shaft (9),
said PTO assembly (1) comprising a gear module (20) operatively interposed between said intermediate shaft (9) and one between said output shaft (6) and said input shaft (5),
said gear module (20) being configured to couple said intermediate shaft (9) to said one between said output shaft (6) and said input shaft (5) or to uncouple said intermediate shaft (9) to said one between said output shaft (6) and said input shaft (5).

2. Power take-off assembly according to claim 1, wherein said gear module (20) is configured to couple said intermediate shaft (9) to said one between said output shaft (6) and said input shaft (5) via a plurality of different gear ratios.

3. Power take-off assembly according to claim 1 or 2, wherein said gear module (20) comprises at least two first geared wheels (20a', 20a") carried by one between said output or input shafts (5,6) and said intermediate shaft (9) in a rotatable free manner and at least two second geared wheels (20b', 20b") carried by the other between said output or input shafts (5, 6) and said intermediate shaft (9) a fixed manner and configured to engage with said first geared wheels (20a', 20a").

4. Power take-off assembly according to claim 3, wherein said gear module (20) comprises a coupler (21) configured to selectively couple said first geared wheels (20a', 20a") to said one between said output or input shafts (5,6) and said intermediate shaft (9).

5. Power take-off assembly according to claim 4, wherein said coupler (21) is a synchronizer or a frontal teethed driver.

6. Power take-off assembly according to claim 4 or 5, wherein said gear module (20) comprises actuator means (22) configured to control said coupler (21).

7. Power take-off assembly according to any of the preceding claims, wherein said clutch means (13) comprises an actuator element (16) and a at least one friction element (14) carried by said actuator element (16) and by said intermediate shaft (9), said actuator element (16) being configured to move with respect to said intermediate shaft (9) to couple at contact said at least one friction element (14) together.

8. Power take-off assembly according to claim 7, wherein said clutch means (16) comprise actuator means (17) configured to move said actuator element (16).

9. Power take-off assembly according to claim 7 or 8, wherein said clutch means (13) comprises elastic means (18) configured to maintain said actuator element (16) in a rest position wherein said at least one friction element (14) are not coupled together at contact.

10. Power take-off assembly according to any of claims 7 to 9, wherein said actuator element (16) is carried by said input shaft (9).

11. Power take-off assembly according to any of the preceding claims, wherein one between said output shaft (6) and said input shaft (5) and said intermediate shaft (9) are coaxial.

12. Power take-off assembly according to any of the preceding claims, wherein one between said output shaft (6) and said input shaft (5) is parallel to the other e between said output shaft (6) and said input shaft (5) and to said intermediate shaft (9).

13. Power take-off assembly according to any of the preceding claims, further comprising a cap (10) configured to cover an outer portion (6b) of said output shaft (6).

14. Power take-off assembly according to any of the preceding claims, wherein said clutch means (13) are configured to selectively engage said input shaft (5)and said intermediate shaft (9), said clutch means (13) being placed vertically above said output shaft (6).

15. Method for seasonally disengaging a power take-off assembly (1) according to any of claims 1 to 14 from one between an input shaft (5) or an output shaft (6) of this latter, said method comprising the step of controlling the gear module (20) of said power take off assembly (1) to either couple an intermediate shaft (9) to said one between said output shaft (6) and said input shaft (5) or to uncouple said intermediate shaft (9) to said one between said output shaft (6) and said input shaft (5).
